# EUROPEAN PATENT APPLICATION

(11) **EP 4 297 013 A1**
(43) Date of publication of application: **27.12.2023**
(21) Application number: 23178837.3
(22) Date of filing: 13.06.2023
(51) Int. Cl.: G10H 1/00, G10H 1/34, G10H 1/02, G06F 1/3203, G06F 3/048, G10H 1/36

(54) **ELECTRONIC MUSICAL INSTRUMENT, OPERATION STATUS NOTIFICATION METHOD OF ELECTRONIC MUSICAL INSTRUMENT, AND PROGRAM**

(30) Priority: 17.06.2022 JP 2022098363
(71) Applicant: Casio Computer Co., Ltd., Tokyo 151-8543 (JP)
(72) Inventor: OKANO, Shingo, Tokyo, 205-8555 (JP); IKEDA, Akira, Tokyo, 205-8555 (JP); TERAO, Ken, Tokyo, 205-8555 (JP); MORITANI, Shinichi, Tokyo, 205-8555 (JP); KAJIKAWA, Tomoya, Tokyo, 205-8555 (JP); MORIYAMA, Osamu, Tokyo, 205-8555 (JP)
(74) Representative: Plougmann Vingtoft a/s

(57) **Abstract**

An electronic musical instrument (1) includes an operation receiver (11) that receives an input operation, a notifier (60), and a controller (40). The controller (40) performs a first process upon duration of a detected continuation of the input operation being a reference time or longer. The controller (40) performs a second process upon duration of a detected continuation of the input operation being less than the reference time. The controller (40) causes the notifier (60) to notify a content from which it is determinable whether or not duration of a detected continuation of the input operation being the reference time or longer.

## Description

### TECHNICAL FIELD

The present disclosure relates to an electronic musical instrument, an operation status notification method of the electronic musical instrument, and a program.

### DESCRIPTION OF RELATED ART

There is an electronic musical instrument that electronically generates sounds in response to input operations related to a musical performance. The musical performance is performed while the electronic musical instrument is supplied with electric power. At the end of the musical performance, a power supply to the electronic musical instrument is cut off. The power supply is switched on or off in response to specific input operations to an operation receiver.

There is also an electronic musical instrument that outputs sound not only based on the musical performance, but sound data acquired from external devices, etc. The electronic musical instrument can superimpose the sound that is output based on the sound data and the sound that is output according to the musical performance. JP2021-81627A discloses a technique for optimizing a process of a signal processing circuit regarding sound output in an electronic musical instrument that has a musical instrument playing function and a music reproducing function, depending on whether or not electric power is supplied to perform the musical instrument playing function.

In the electronic musical instrument that is used with the action statuses and functions switched as described above, a specific operation receiver may serve as a receiver of various switching operations. However, in such cases, it may be difficult for the user to determine the state or function to which the user is about to switch during the operation.

### SUMMARY OF THE INVENTION

In order to achieve the above object, according to the present invention, an electronic musical instrument includes:
an operation receiver that receives an input operation;
a notifier; and
a controller,
wherein, the controller performs a first process upon duration of a detected continuation of the input operation being a reference time or longer,
wherein the controller performs a second process upon duration of a detected continuation of the input operation being less than the reference time, and
wherein the controller causes the notifier to notify a content from which it is determinable whether or not duration of a detected continuation of the input operation being the reference time or longer.

### BRIEF DESCRIPTION OF DRAWINGS

FIG. 1 is a plan view of an electronic keyboard musical instrument, which is an electronic musical instrument of the present embodiment.
FIG. 2 is an enlarged oblique view of the area around a pitch bender.
FIG. 3 is a block diagram illustrating a functional configuration of the electronic keyboard musical instrument.
FIG. 4A is a diagram illustrating a display state in a normal acting state.
FIG. 4B is a diagram illustrating a change in the display state of a touch encoder when a power button is operated.
FIG. 5 is a diagram illustrating a change in the display state when the power button is operated.
FIG. 6 is a diagram illustrating an example of changes in luminance of the LEDs of respective colors in the pitch bender light emitter.
FIG. 7 is a flowchart illustrating a control procedure by the electronic keyboard musical instrument.
FIG. 8 is a flowchart illustrating a control procedure of the pitch bender light emitter by the electronic keyboard musical instrument.

### DETAILED DESCRIPTION

Hereinafter, one or more embodiments of the present invention will be described with reference to the drawings.

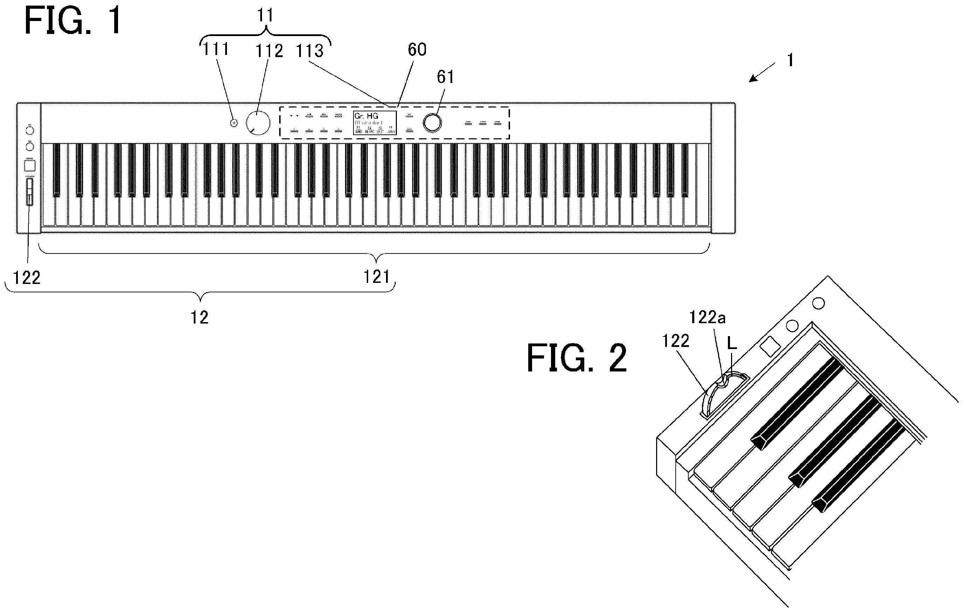

FIG. 1 is a plan view of an electronic keyboard musical instrument 1 that is an electronic musical instrument of the present embodiment.

The electronic keyboard musical instrument 1 has a functional operation receiver 11, a musical performance receiver 12, a display 60 (notifier), and the like.

The musical performance receiver 12 is a part that receives an operation for a musical performance by the user with the electronic keyboard musical instrument 1, and includes a keyboard 121, a pitch bender 122 (pitch bend), and the like.

The keyboard 121 is not particularly limited but has white and black keys that are aligned and receive operations to output respective notes over a range of seven octaves. Unless otherwise set, the keyboard 121 receives operations to designate pitches such that a semitone is in accordance with the equal temperament. The keyboard 121 may include a foot-operated pedal keyboard (foot keyboard) in addition to or instead of the normal finger-operated keyboard.

The pitch bender 122 has an approximately disk shape and is positioned such that the normal direction of the disk surface is parallel to the aligning direction of the keyboard 121 (left and right direction of FIG. 1). The pitch bender 122 is a rotary wheel that is positioned so that an outer edge of the disk of a certain angular range protrudes from an upper surface of the electronic keyboard musical instrument 1. The pitch bender 122 is a rotary wheel that receives a rotating operation around the above normal passing through the center of the disk, and the movable angular range of the rotary wheel is larger than the angular range of the protruding outer edge.

FIG. 2 is an enlarged oblique view of the area around the pitch bender 122.

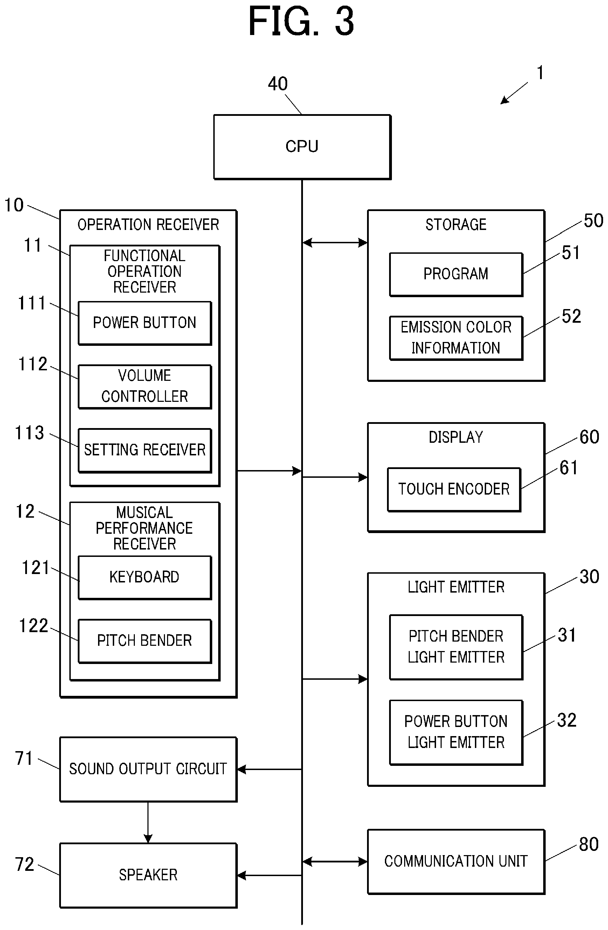

In response to the rotating operation, the pitch bender 122 receives an operation that allows the pitch, which can only be output every semitone with the keyboard 121, to change continuously depending on the angle of rotation (rotation amount from the center position of the rotation range as a reference (reference position). The pitch bender 122 has, for example, a depression 122a such that a finger can be placed on a reference position, but is not limited to this. The pitch bender 122 automatically returns to a reference position (rotation amount becomes zero) when the user removes his or her finger from the pitch bender 122. In response to a setting operation, the amount of change in pitch when the angle of rotation (rotation amount) of the pitch bender 122 is at its maximum may be changed (for example, in the range of a semitone to one octave). The pitch bender 122 has a pitch bender light emitter 31 (see FIG. 3) located inside. The pitch bender 122 has a window L through which the light emitted by the pitch bender light emitter 31 passes to be emitted. Here, the window L is arc-shaped and is located along the outer circumference of the side surfaces of the pitch bender 122 (the edges of the upper and lower surfaces of the disk) (only one side surface is illustrated in the drawing). The window L need not be transparent, as long as it transmits light. The interior of the pitch bender 122 need not be visible through the window L.

The electronic keyboard musical instrument 1 may have a modulation wheel instead of or together with the pitch bender 122. The modulation wheel adjusts and defines the degree of sound modulation, for example, vibrato. Like the pitch bender 122, the modulation wheel receives the rotating operation within a certain angular range from a center position of the rotation range as a reference. Unlike the pitch bender 122, when the user removes his or her finger, the modulation wheel does not automatically return to its reference position (rotation amount becomes zero), but remains still.

The functional operation receiver 11 receives input operations such as a setting whether or not power is supplied to the device (electronic keyboard musical instrument 1), volume settings, and tone and reverberation settings during the musical performance. The functional operation receiver 11 includes a power button 111, a volume controller 112, a setting receiver 113, and the like.

The power button 111 is a pushbutton that receives an operation of switching whether or not power is supplied to the device (electronic keyboard musical instrument 1). The power button 111 includes a power button light emitter 32 located inside (see FIG. 3). The power button light emitter 32 emits light when the power supply is turned on. The light emitted by the power button light emitter 32 may be white, but is not limited to this.

The volume controller 112 is a rotary controller that adjusts volume of sound that is output from a speaker 72 (see FIG. 3). The volume controller 112 has a sign indicating the rotating direction. The volume controller 112 can rotate as long as the sign is within a predetermined range (for example, a range of about 300 degrees). For example, the more the sign moves clockwise, the louder the output volume is controlled to be. The volume controller 112 may be another operating means such as a combination of one pushbutton switch to increase volume and another pushbutton switch to decrease volume.

The setting receiver 113 receives settings for tone (frequency spectrum (overtone) distribution), effects such as reverberation, metronome sound simultaneously output for musical performance practice, pitch, and the like. The setting receiver 113 is not particularly limited, but is a touch panel in this case, which detects a contact operation with a finger or the like to a position that overlaps with the display content of the display 60 and receives an input operation depending on the contact position.

The display 60 displays the setting status and contents of various functions. For example, the status of function settings is indicated by whether or not the light source such as an LED is lit, by whether or not the light source such as an LED is blinking, or by the frequency or pattern of the blinking below (inside) a light-emitting window that is labeled with a sign or the like to identify the content of each function setting. As described above, the light emitting window may be positioned overlapping the touch panel in a plan view. The display 60 may also have a digital display screen made of liquid crystal or the like on which characters, signs, and the like are displayed so as to indicate the contents of the settings, such as the quality of the output sound.

A touch encoder 61 is included in the display 60 and the setting receiver 113. The touch encoder 61 is a module that performs simple processes (including output of processing commands to other parts of the electronic keyboard musical instrument 1) in response to a touch operation or an external operation (a signal input in response to an external operation). The touch encoder 61 has a light emitter such as an LED that emits light that illuminates the periphery of the upper surface the touch encoder 61.

FIG. 3 is a block diagram illustrating a functional configuration of the electronic keyboard musical instrument 1.

The electronic keyboard musical instrument 1 includes an operation receiver (input device) 10, a light emitter 30, a CPU 40 (Central Processing Unit) (controller), a storage 50, the display 60, a sound output circuit 71, the speaker 72, a communication unit 80, and the like.

The operation receiver 10 receives an input operation and outputs a signal in response to the input operation. The operation receiver 10 includes the above-mentioned musical performance receiver 12 and the functional operation receiver 11.

In addition to the above, the functional operation receiver 11 may include a dedicated pushbutton switch, a rotary switch, a rocker switch, a slide switch, or a combination of two or more of these.

The light emitter 30 includes the above pitch bender light emitter 31 (first light emitter) and the power button light emitter 32 (second light emitter). Their light sources are respective LEDs. The power button light emitter 32 may be a monochromatic white LED. The power button 111, for example, includes a cover member made of a circular light-transmitting member. The interior of the cover member need not be visible. When the LED located under the cover member emits light outward through the light-transmitting member, the inside or periphery of the power button 111 (the part that detects a pressing operation) is at least partly illuminated.

The pitch bender light emitter 31 has a set of LEDs of respective RGB colors and can emit colored light. The light emitted by the LEDs in the pitch bender 122 is guided to the periphery of the pitch bender 122 via a light guide member as needed and is emitted outward almost evenly (with little nonuniformity) through the window L having light permeability. The color of the emitted light is changeable as appropriate by switching by changing and combining the luminances of the RGB colors. The pitch bender light emitter 31 may have multiple sets (for example, three sets) of LEDs that emit light in different directions along the outer circumference of the sides of the pitch bender 122 so as to emit light of different colors at different positions on the outer circumference.

The CPU 40 is a processor that performs arithmetic processes and integrated control of all the actions of the electronic keyboard musical instrument 1. The CPU 40 may be a single processor or multiple processors performing processes in parallel or independently of each other depending on the processes. The CPU 40 is not limited to a general-purpose processor, but may also be a dedicated processor.

The storage 50 includes volatile memory (RAM) and nonvolatile memory. The RAM provides the CPU 40 with memory space for work and stores temporary data. The nonvolatile memory stores action information, a program(s) 51 for control, and the like. The action information may include the contents of the actions for the settings set in advance (preset), for example, processes related to timbre (overtone distribution), rise and fall of sound and reverberation (echo) of sound, and the like. The action information also includes the emission color information 52 on a color change pattern of the light emitted by the pitch bender light emitter 31, which will be described later. The programs 51 include a light emission control program for the pitch bender light emitter 31 using the above emission color information 52 and the like. At least the CPU 40 and the storage 50 constitute a computer of the present embodiment.

The display 60 performs a display action based on the control by the CPU 40. As described above, each display 60 has a display screen and a portion(s) indicating functional settings and the like by the on/off status of LED lamps.

The sound output circuit 71 generates a drive signal for outputting the output sound from the speaker 72 depending on the settings received by the musical performance receiver 12 and the setting receiver 113 that are operated, and outputs the drive signal to the speaker 72. The speaker 72 generates and outputs sound in response to the above drive signal. The sound output circuit 71 and the speaker 72 may be able to produce stereo sound.

The communication unit 80 controls communication with external devices. The communication unit 80 receives sound data from external devices and sends the data to the sound output circuit 71 such that the speaker 72 outputs sound in real time. The communication unit 80 may have a connection terminal to which a signal line is connected, or may have a network card for network connection. In addition to or instead of these, the communication unit 80 may have an antenna and communication module for short-range wireless communication, such as Bluetooth (registered trademark), to send and receive data via short-range wireless communication to and from external devices.

Next, the power button 111 of the present embodiment will be described.

In the electronic keyboard musical instrument 1, the state can be switched between a stop state in which the power supply is cut off (turned off) and the electronic keyboard musical instrument 1 stops acting, a normal acting state in which the power supply is received (turned on) so that the electronic keyboard musical instrument 1 can take a normal action, and a standby state in which the electronic keyboard musical instrument 1 stops the action related to playing the musical instrument.

In the normal acting state, all functions of the electronic keyboard musical instrument 1 can be performed, for example, sound of a musical performance can be output from the speaker 72 in response to the operation of the keyboard 121. In the stop state, the electronic keyboard musical instrument 1 only needs to be able to detect the operation of turning on the power button 111. For example, in the stop state, power is supplied only to the parts of the power button 111 and the CPU 40 that are necessary for detecting the operation of turning on the power button 111, and no power is supplied to any other parts. In the normal acting state, a circle (ring) at a certain luminance is displayed on the circumference of its upper surface by the light emitter of the touch encoder 61.

When the power button 111 is pressed down in the stop state (a continuous pressing operation for a certain period of time or longer may be required), the power supply is started, and the CPU 40 and other parts are activated and switched to the normal acting state. In the normal acting state, when a reference time (several minutes, for example, six minutes) has elapsed without any operation related to a musical performance, that is, without the pressing of any key on the keyboard 121, the rotation of the pitch bender 122 (rotary wheel), or the like, the electronic keyboard musical instrument 1 automatically enters the standby state. When any operation related to a musical performance is detected in the standby state, the electronic keyboard musical instrument 1 immediately returns to the normal acting state.

The musical performance function is turned off in the standby state. That is, the electronic keyboard musical instrument 1 turns off the processing circuit related to output of sound in response to the operation related to the musical performance. In the standby state, the electronic keyboard musical instrument 1 also stops various display actions by the display 60, the light emission action by the power button light emitter 32, the receipt of the setting operation on the setting receiver 113, and the like. On the other hand, even in the standby state, only the pitch bender light emitter 31 in the electronic keyboard musical instrument 1 remains turned on and indicates that the power supply is not cut off. In this state, when a sound signal is input through the communication unit 80, the sound output action can be made through the speaker 72 based on the sound signal. That is, in the standby state, the electronic keyboard musical instrument 1 functions as an external speaker for other electronic devices.

When the power button 111 has been pressed down in the normal acting state, depending on whether or not a continuous pressing operation (that is, whether or not the button 111 has been held down ) for a reference time (for example, one second) or longer is detected, it is determined whether the action to cut off the power supply and to enter the stop state or the action to enter the standby state (which of the different content operations) is requested, and the process according to the determined request is done. When the power button 111 is pressed down in the standby state, a simple display indicating that the device is currently in the standby state is made, and the standby state is maintained. It may be determined that a request for an action to enter the stop state has been received when the power button 111 is pressed continuously for a reference time or more in the standby state, as well as in the normal acting state.

In other words, the operation to request the change from the normal acting state to the stop state and the operation to request the change from the normal acting state to the standby state among the switching actions related to the power supply are each a single operation of pressing the power button 111 and are the same except that the detected durations of the power button 111 are different. Therefore, it is difficult for the user who operates the power button 111 to stops an action of the electronic keyboard instrument 1 to grasp how long he or she needs to hold down the power button 111 to make the action request for the stop state, which may cause an unintended action request to be output by mistake.

When the press of the power button 111 is detected in the normal acting state, the electronic keyboard musical instrument 1 displays a circle (ring) on the upper circumference of the touch encoder 61 that is brighter than in the normal acting state. During the period of continuous detection of the press (from the start of detection until it is no longer detected) or during the reference time from the start of the detection, the electronic keyboard musical instrument 1 reduces the central angle (length) of the displayed arc at a rate at which the entire circle disappears in the reference time (changes the notification step) so as to notify the approximate time remaining before entering the stop state.

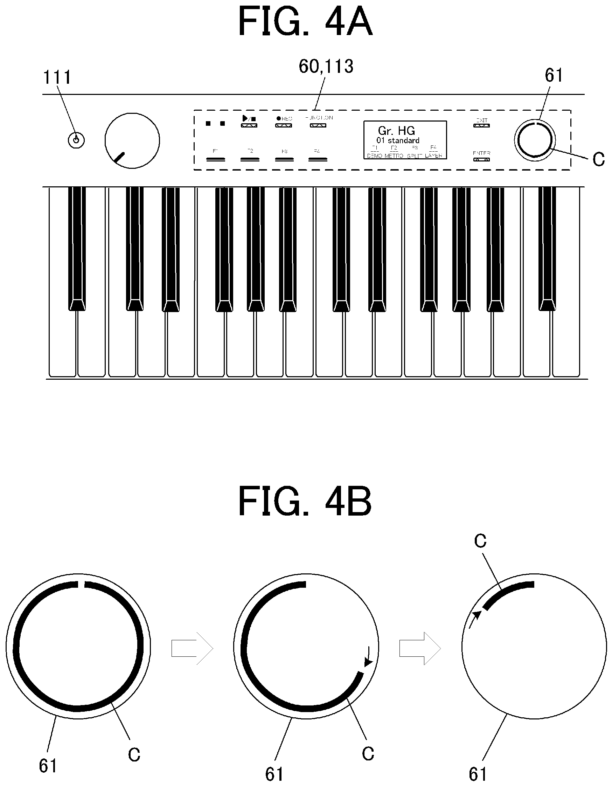

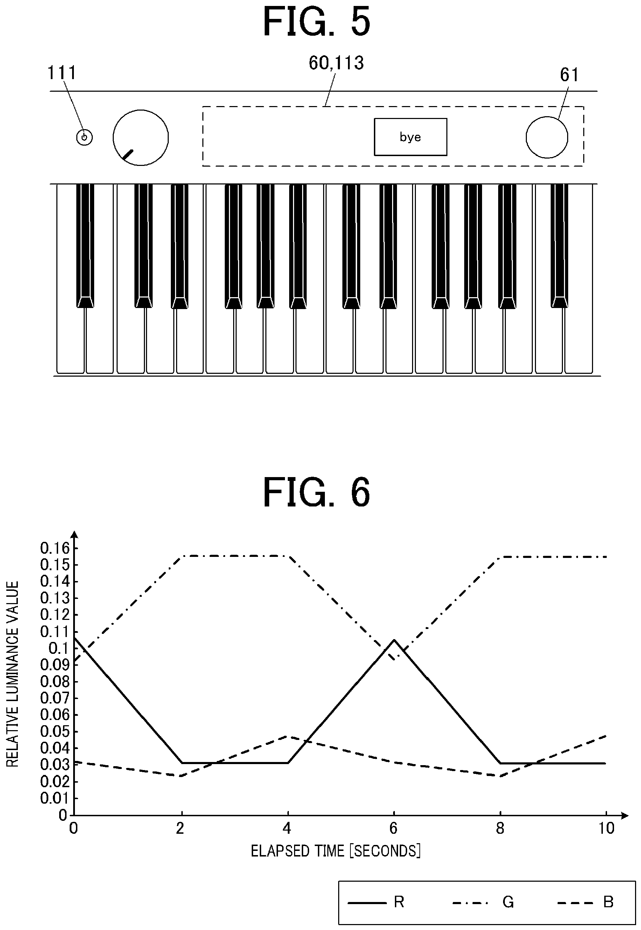

FIG. 4A, FIG. 4B and FIG. 5 illustrate changes in the state of the display when the power button 111 is operated. As illustrated in FIG. 4A, in the normal acting state, the display 60 displays the status of various settings and display for receiving changes of the settings. When the power button 111 is pressed, a circle C is displayed on the display surface of the touch encoder 61. The longer the detected duration of pressing the power button 111, the shorter the length of the circle C. In FIG. 4B, the almost full circle C starts to be erased clockwise from the 12 o'clock position and disappears completely after the reference time has elapsed. The displayed circle C need not strictly represent the ratio of the remaining time to the reference time. The touch encoder 61 may display the degree of the detected duration in multiple steps (notification). Alternatively, visual effects may be used. For example, one end of the circle C (the end to be erased) may fade away over a certain period.

When the detected duration of the pressing state of the power button 111 reaches the reference time, the entire circle C disappears, the action request related to cutoff of the power supply (change of the state to the stop state) is received, and the process to change of the stop state (action stop process, first process) is started. Here, as illustrated in FIG. 5, "bye" is displayed on the display screen of the display 60 for a certain period of time (for example, one to two seconds), and then all displays (except for the lighting of the pitch vendor light emitter 31 described above) are terminated (erased), and the temporary storage data in the RAM of the storage 50 is erased and the CPU 40 is turned off. The temporary storage data in the RAM need not be actively erased, as long as the refreshment action is stopped.

When the pressing operation of the power button 111 from the outside by the user or the like is stopped (terminated) before the reference time has elapsed, i.e., before disappearance of the entire circle C, the process to enter the stop state (action stop process) is not performed. In this case, another process, for example, the process to change the state to the standby state (the second process), is performed. When this process of changing the state to the standby state is performed, instead of the above "bye", the display 60 may temporarily display "STANDBY: OK", for example. Alternatively, in this case, the display content of the touch encoder 61 may not immediately change (not be erased), and a part of the circle C may remain to be displayed for a certain time (for example, 1 to 2 seconds) before it is completely erased.

Except in the stop state, the pitch bender 122 emits light of a desired color from the window L along the outer circumference of the upper and lower surfaces of the approximate disk shape (side surface) as the pitch bender light emitter 31 emits light as described above. When the pitch bender 122 receives the rotating operation, the color of the light emitted from the window L changes depending on the direction and amount of the rotation. For example, the emission color may gradually change to red in response to the rotating operation of the pitch bender 122 which raises the pitch of the sound, and the emission color may gradually change to green in response to the rotating operation of the pitch bender 122 which lowers the pitch of the sound.

When the pitch bender 122 does not receive the rotating operation, the pitch bender light emitter 31 slowly changes the emission color (the color of the light emitted from the window L) over time. Here, the change over time may be periodic or random.

FIG. 6 is a diagram illustrating an example of the change in emission intensity of each of the LEDs of the RGB colors in the pitch bender light emitter 31.

For example, the emission intensity (luminance) of each of the RGB colors changes with six-second cycles. Due to other purposes that are not described here, the periodic change is defined such that the emitted light is not bluish color, but mainly between reddish color and greenish color. However, the emission change pattern is not limited to this.

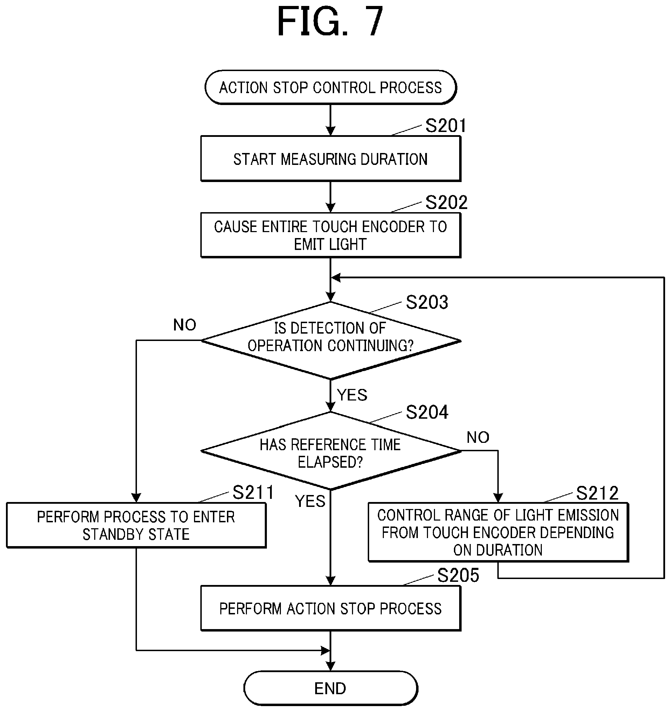

FIG. 7 is a flowchart illustrating the control procedure by the CPU 40 of the action stop control process in the operation status notification method performed by the electronic keyboard musical instrument 1 in the present embodiment. This action stop control process is started in response to detection of the pressing operation of the power button 111 in the normal acting state.

The CPU 40 starts measuring the detected duration of the press state of the power button 111 (Step S201). The CPU 40 causes the touch encoder 61 to emit light from the entire circle C (Step S202).

The CPU 40 determines whether or not the detection of the pressing operation of the power button 111 is continuing (Step S203). If it is determined that the detection of the pressing operation is continuing ("YES" in Step S203), the CPU 40 determines whether or not the detected duration being measured is the reference time or longer (the reference time has elapsed) (Step S204).

If it is determined that the detected duration being measured is less than the reference time ("NO" in Step S204), the CPU 40 controls the range of light emission from the touch encoder 61 depending on the detected duration (Step S212; notification control). Then, the CPU 40 returns the process to Step S203. If it is determined that the detected duration being measured is the reference time or longer ("YES" in Step S204), the CPU 40 performs the action stop process of the electronic keyboard musical instrument 1 (Step S205; first execution). As described above, the CPU 40 finishes the process related to the sound output based on the musical performance and the external sound data, finishes the display action, and finishes the normal action of the CPU 40 itself to finish the action of the electronic keyboard musical instrument 1. Then, the CPU 40 finishes the action stop control process. As a result, the electronic keyboard musical instrument 1 in the normal acting state enters the stop state.

If it is determined in the determination process in Step S203 that the detection of the pressing operation is not continuing (here, pressing operation for the reference time or longer has not been detected) ("NO" in Step S203), the CPU 40 performs the process to enter the standby state (Step S211; second execution). The CPU 40 finishes the process to perform the sound output based on the musical performance and finishes the display action other than the control of the light emission by the pitch bender light emitter 31. Then, the CPU 40 finishes the action stop control process.

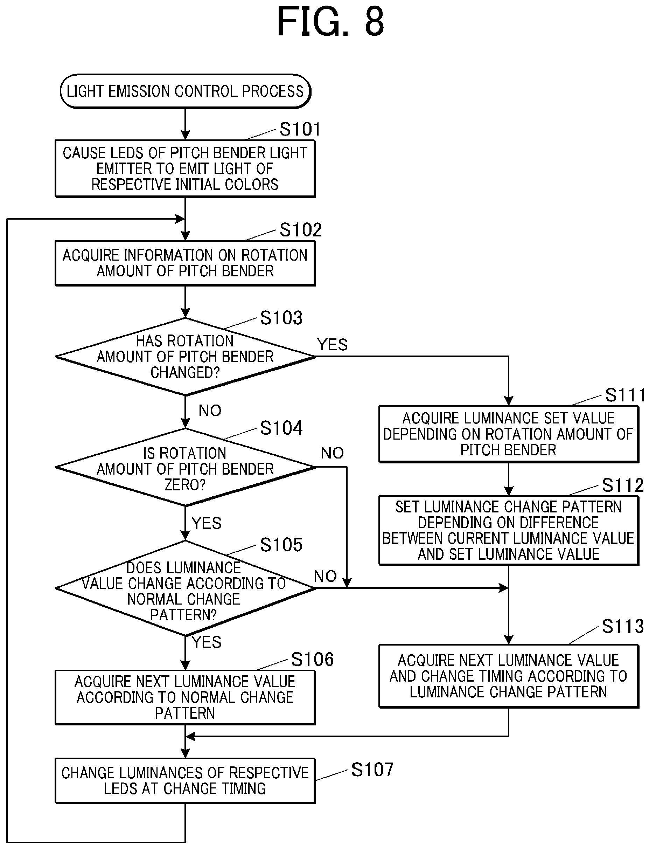

FIG. 8 is a flowchart illustrating the control procedure by the CPU 40 of a light emission control process of the pitch bender light emitter 31 performed by the electronic keyboard musical instrument 1. This light emission control process starts automatically when the power supply to the electronic keyboard musical instrument 1 is started. The process is repeated throughout the duration that power is supplied to the electronic keyboard musical instrument 1.

The CPU 40 causes the LEDs of the pitch bender light emitter 31 to emit light of respective initial colors (step S101). The CPU 40 acquires information on the rotation amount of the pitch bender 122 (Step S102).

The CPU 40 determines whether or not the rotation amount of the pitch bender 122 has changed from that of the previous information acquisition (Step S103). If it is determined that the rotation amount of the pitch bender 122 has changed ("YES" in Step S103), the CPU 40 refers to the emission color information 52 and acquires luminance set values for the respective LEDs depending on the rotation amount of the pitch bender 122 (step S111).

The CPU 40 sets a luminance change pattern to continuously change the luminances from the current luminance values to the luminance set values depending on the differences between the current luminance values and the acquired luminance set values (Step S112) . The CPU 40 acquires the next luminance value and the timing for changing to the next luminance value according to the luminance change pattern that has been set (Step S113).

The CPU 40 causes the pitch bender light emitter 31 to change the luminances of the respective LEDs at the change timing (step S107). The CPU 40 then returns the process to step S102.

If it is determined in the determination process in Step S103 that the rotation amount of the pitch bender 122 has not changed ("NO" in Step S103), the CPU 40 determines whether or not the rotation amount of the pitch bender 122 is zero (Step S104). If it is determined that the rotation amount of the pitch bender 122 is not zero ("NO" in Step S104), the CPU 40 moves the process to Step S113. In the process of Step S113 in this case, the light may have already been the luminance depending on the rotation amount of the pitch bender 122. In this case, the CPU 40 does not have to set the luminance value again, but simply needs to return the process to Step S102 when the change timing is reached.

If it is determined in the determination process in Step S104 that the rotation amount of the pitch bender 122 is zero ("YES" in Step S104), the CPU 40 determines whether or not the luminance value changes according to the normal change pattern (Step S105). If it is determined that the luminance value does not change according to the normal change pattern ("NO" in Step S105), the CPU 40 moves the process to Step S113.

If it is determined that the luminance value changes according to the normal change pattern ("YES" in Step S105), the CPU 40 acquires the next luminance value according to the normal change pattern based on the emission color information 52 (Step S106). Then, the CPU 40 moves the process to Step S107.

As described above, the electronic keyboard musical instrument 1 of the present embodiment includes the power button 111 of the operation receiver 10 that receives an input operation, the touch encoder 61 as the notifier, and the CPU 40. When the duration of the detected continuation of the input operation is the reference time or longer, the CPU 40 performs the action stop process as the first process. When the continuous input operation finishes with the duration of the detected continuation of the input operation less than the reference time, the CPU 40 performs the process to change the state to the standby state as the second process. When the continuous input operation starts to be detected, the CPU 40 causes the display of the touch encoder 61 to notify (display) a content which it is determinable whether or not the duration of the detected continuation has reached the reference time.

Thus, when different action requests are received by the electronic musical instrument depending on the detected duration of the input operation, it is difficult for the user to grasp whether or not the required input operation has been performed and whether or not the operation has been performed for the required duration. The electronic keyboard musical instrument 1 causes the touch encoder 61 and the like to perform notification in which the content of the notification changes so as to enable the user to determine whether or not the duration is the reference time or longer. This allows the user to more reliably select to perform the input operation above or below a certain detected duration. Thus, the user can clearly grasp the switching of the operation received by the electronic keyboard musical instrument 1.

The notifier also has the display 60. The CPU 40 changes the steps of the notification by changing the length of the line that is displayed by the display 60 depending on the detected duration of the input operation. The user can easily grasp the detected duration of the input operation (in particular, the ratio of the detected duration of the input operation to the reference time) based on the length of the line displayed in this way. Therefore, the user can determine whether or not the input operation has been continued for the reference time or longer, and can continue the input operation for the reference time or longer or terminate it within the reference time without worry.

In the above, the displayed line whose length changes has a ring shape.

Such a line does not occupy a large display area and can reduce overlap of the display area with other displays.

The electronic keyboard musical instrument 1 also includes a touch encoder 61, which is included in the notifier. By using such a module, a real-time display action can be performed easily, even in an electronic musical instrument that has low processing performance except for the musical performance.

The CPU 40 also performs the action stop process of the device (electronic keyboard musical instrument 1) as the first process. Thus, in the electronic keyboard musical instrument 1, the input operation related to turning off the power is the same operation as other input operations, but differs from the other input operations in that it requires a continuous operation for the reference time or longer. Therefore, in the electronic keyboard musical instrument 1, both the prevention of unintentional stop of the action and the suppression of the increase of operation keys, etc. are achieved. The user who actually intends to turn off the power can grasp the remaining duration to be required and perform the input operation without worry.

The CPU 40 also performs, as the second process, the process to change the state to the standby state in which the action related to the musical performance is stopped. In other words, in response to a short-time operation of less than the reference time, the electronic keyboard musical instrument 1 in the normal acting state enters the standby state. User convenience is enhanced by the correspondence of such an easy operation with the entry to the standby state, in which easy recovery to a musical performance is possible. Furthermore, because an operation longer than the reference time is associated with the stop of the action, the power supply state can be switched using only the power button 111. With such settings, the user can easily grasp the correspondence between the operations and can easily use the electronic keyboard musical instrument 1.

The electronic keyboard musical instrument 1 also includes the rotary wheel, such as the pitch bender 122, which receives the rotating operation, the pitch bender light emitter 31, which is located inside the pitch bender 122 and emits light to the outside of the pitch bender 122, and the power button light emitter 32, which illuminates the inside or periphery of the power button 111. The CPU 40 stops the action of the power button light emitter 32 in the standby state. Thus, in the standby state, the pitch bender light emitter 31, not the power button 111, is still emitting light. As a result, from an operation part related to the musical performance, the user can grasp that the electronic keyboard musical instrument 1 is in the standby state in which the functions related to the musical performance are turned off. Therefore, the user can easily handle the electronic keyboard musical instrument 1.

The color of the light emitted from the pitch bender light emitter 31 can be changed. The CPU 40 may change the color of the light emitted by the pitch bender light emitter 31 during the standby state. Such a change in the display state will help the user to notice the light emission state of the pitch bender light emitter 31 and thus prevent the user from forgetting to turn off the power supply.

The rotary wheel includes the pitch bender 122 or the modulation wheel. In the electronic keyboard musical instrument 1, it is possible to change the light emitting state of the pitch bender 122 related to the musical performance, as well as the operation receiver of basic functions such as the power button 111. Therefore, these rotary wheels can be used efficiently by combining changes in the light emission state in the use of the pitch bender 122, for example, with staging.

The electronic keyboard musical instrument 1 also includes a keyboard 121 that receives input operations for designating the pitch of the sound to be output. That is, the keyboard musical instrument 1 using the above configuration and the display control allows the user to easily check and grasp the operation status on the same surface as the upward-facing keyboard.

In the operation status notification method of the electronic musical instrument of the present embodiment having the operation receiver 10 (power button 111) and the touch encoder 61 that receive input operations, the first process is performed when the duration of the detected continuation of the input operation is the reference time or more. When the detected duration is less than the reference time, the second process is performed. When the continuous input operation starts to be detected, the touch encoder 61 is caused to notify (display) the content from which it is determinable whether or not the detected duration is the reference time or longer.

Thus, in the operation status notification method of the present embodiment, when the operation receiver 10 (here, the power button 111) in the electronic musical instrument receives the action request that is different depending on the detected duration of the input operation, the touch encoder 61 or the like performs the notification from which it is determinable whether or not the detected duration is the reference time or longer based on the change of the notification content. Therefore, the user can grasp whether or not the required input operation has been performed and whether or not the operation has been performed for the required duration or longer more reliably, so as to select and perform the input operation above or below a certain detected duration. Therefore, according to the operation status notification method of the electronic musical instrument, the user can clearly grasp from the electronic musical instrument the switching status of the received action request by the operation during the operation (holding down) of the power button 111.

When the program 51 related to the above-mentioned operation status notification method is installed in and performed by the computer of the electronic musical instrument, the user can clearly grasp switching of the received action request by the operation during the operation (holding down) of the power button 111 without any effort from an electronic musical instrument of a conventional configuration.

The present invention is not limited to the above embodiment, but can be modified in various ways.

In the embodiment described above, the determination target is the duration of holding down a pushbutton, but is not limited to this as long as the duration of the input operation can be determined. For example, a slide switch or a lever that automatically returns to its initial position when the user removes his/her hand may be used.

In the example described in the above embodiment, the change from the normal acting state to the stop state and the change from the normal acting state to the standby state are switched depending on the detected duration of the same operation, but the present disclosure is not limited to this. When selective execution among other multiple functional operations is switched based on the detected duration of a certain operation, the above display action may be performed depending on the detected duration. In this case, the change to the stop state may be performed in response to a continuous operation for the reference time or longer, and another function that is not the change to the standby state may be performed in response to the continuous operation for less than the reference time.

In the embodiment described above, the circle C was displayed on the touch encoder 61, but the present disclosure is not limited to this. The circle C may be displayed on other parts of the display 60. The content to be displayed may not be the circle C, but other closed shapes such as ellipses, polygons or polygons with rounded corners, or shapes with open ends (preferably, whose positions are readily grasped by the user) such as a straight line, a curved line, or a broken line.

In the embodiment described above, the user can grasp the ratio of the duration of the operation to the reference time based on the shortening of the length of the line of the circle C, but the present disclosure is not limited to this. For example, a dot or line may appear at the top (left edge) of the displayed range and move to the bottom (right edge) of the displayed range, so that the user can grasp the duration of the operation. The display color of the shape may change from blue to red, or the luminous intensity of the displayed dots or lines may be reduced. The area of the region to be displayed may be changed instead of, or in addition to, the length or position of the shape. The displayed region may change as a circular displayed region is reduced and becomes a fan shape, or as a square displayed region is reduced in the vertical, horizontal, or diagonal direction, for example. Furthermore, instead of the area of the displayed shape itself, the area of the region whose color is changed in the shape may be changed (increased).

The notification action depending on the detected duration of the input operation is not limited to the display action. For example, the pitch of the sound output may be decreased from a certain pitch by a predetermined range, such as one octave such that the user can grasp the ratio of the detected duration to the reference time based on the sound output. Such a change in pitch of the sound output may follow a musical scale or be continuous.

The notification action does not have to change in multiple steps depending on the detected duration up to the reference time as described above, as long as it is possible to simply determine whether or not an input operation is detected and which is longer, the duration of the detection or the reference time.

As the notification action, when the detected duration has reached the reference time, the light emitter of the touch encoder 61 may stop emitting light so that the lighting state is different from that in the normal acting state. Especially when such a notification action is to be performed, in response to the finish of the operation before the detected duration reaches the reference time, the notification action that the detected duration has been less than the reference time is preferably made continuously for a certain period of time.

Alternatively, the notification action may be stopped when the detected duration has reached the reference time. In other words, in the notification action, only the fact that the detected duration is not more than the reference time may be practically noticed. In contrast, the notifier such as the touch encoder 61 may perform a specific action (such as lighting or sound output action) for a certain period of time that indicates that the detected duration is the reference time or longer. The operation stop process may be performed in parallel with this specific action or may be started after the finish of this specific action (after some time has elapsed).

In the above embodiment, examples of the rotary wheel include the pitch bender and/or the modulation wheel, but the rotary wheel is not limited to these. The rotary wheel may employ any other rotatable configuration.

In the example described in the above embodiment, the emission color by the pitch bender light emitter 31 (color of the light emitted from the window L) changes slowly when power is being supplied and when the pitch bender 122 is not being operated. However, the emission color does not have to change continuously. Light of a fixed color may be emitted from the window L, or the emission color may be temporarily changed. Alternatively, the light emitted by the pitch bender light emitter 31 may blink or change in luminance without changing color.

It is not necessarily the pitch bender light emitter 31 that continues lighting action even in the standby state. The power button light emitter 32 or any other part of the display may continue the lighting action. The electronic keyboard musical instrument 1 does not have to include the pitch bender light emitter 31 or the pitch bender 122 itself.

In the above embodiment, the speaker 72 can output sound in the standby state, but the present disclosure is not limited to this. The standby state may be a state in which some actions are stopped or restricted such that power consumption is lower than in the normal acting state. Depending on the content to be restricted, the degree of stopping the display by the display 60 and the degree of stopping the light emission by the light emitter 30 may be set according to different rules from those in the above embodiment.

In the above embodiment, the electronic musical instrument is the electronic keyboard musical instrument 1 having the keyboard 121, but the present disclosure is not limited to this. The electronic musical instrument may be a stringed instrument, such as a guitar with strings, or a wind instrument.

In the above, the computer-readable medium storing the program 51 for controlling notification control in receiving operations according to the present disclosure is the storage 50 including a HDD and nonvolatile memory, such as a flash memory, but not limited to this and may be another nonvolatile memory, such as an MRAM, or a portable recording medium, such as a CD-ROM or a DVD. As a medium to provide data of the program(s) of the present disclosure via a communication line, a carrier wave can be used.

The specific configuration/components, contents and procedures of the processes and the like described in the above embodiment can be appropriately changed without departing from the scope of the present disclosure.

Although one or more embodiments of the present invention have been described above, the scope of the present disclosure is not limited to the embodiments described above, but includes the scope of claims stated below and their equivalents.

## Claims

1. An electronic musical instrument (1) comprising:
an operation receiver (11) that receives an input operation;
a notifier (60); and
a controller (40),
wherein the controller (40) performs a first process upon duration of a detected continuation of the input operation being a reference time or longer,
wherein the controller (40) performs a second process upon duration of a detected continuation of the input operation being less than the reference time, and
wherein the controller (40) causes the notifier (60) to notify a content from which it is determinable whether or not duration of a detected continuation of the input operation being the reference time or longer.

2. The electronic musical instrument (1) according to claim 1,
wherein the controller (40) causes the notifier (60) to notify a content from which it is determinable whether or not a duration of a detected continuation of the input operation being the reference time or longer upon start of detection of continuation of the input operation.

3. The electronic musical instrument (1) according to claim 1,
wherein the notifier (60) includes a display (61),
wherein the controller (40) causes the notifier (60) to notify the content such that length of a line displayed on the display (61) changes depending on duration of the detected continuation.

4. The electronic musical instrument (1) according to claim 3,
wherein the line is displayed in a ring shape.

5. The electronic musical instrument (1) according to claim 3 or 4,
wherein the notifier (60) includes the touch encoder (61) .

6. The electronic musical instrument (1) according to claim 1,
wherein the first process includes an action stop process to stop an action of the electronic musical instrument (1).

7. The electronic musical instrument (1) according to claim 1,
wherein the second process includes a process to change a state of the electronic musical instrument (1) to a standby state in which an action related to a musical performance is stopped.

8. The electronic musical instrument (1) according to claim 7, further comprising:
a rotary wheel (122) that receives a rotating operation;
a first light emitter (31) that is located inside the rotary wheel (122) and emits light to outside of the rotary wheel (122); and
a second light emitter (32) that illuminates an inside or periphery of the operation receiver (11),
wherein the controller (40) stops an action of the second light emitter (31) in the standby state.

9. The electronic musical instrument (1) according to claim 8,
wherein the first light emitter (31) emits light whose color is changeable, and
wherein the controller (40) causes the first light emitter (31) to change color of the light in the standby state.

10. The electronic musical instrument (1) according to claim 8,
wherein the rotary wheel (122) includes at least one of a pitch bender (122) and a modulation wheel.

11. The electronic musical instrument (1) according to claim 1, further comprising:
A keyboard (121) that receives an input operation to designate a pitch of sound to be output.

12. An operation status notification method of an electronic musical instrument (1) including an operation receiver (11) that receives an input operation and a notifier (60), the operation status notification method comprising:
a first process upon duration of a detected continuation of the input operation being a reference time or longer;
a second process upon duration of a detected continuation of the input operation being less than the reference time; and
causing the notifier (60) to display a content from which it is determinable whether or not duration of a detected continuation of the input operation being the reference time or longer.

13. A program that causes a computer of an electronic musical instrument (1) including an operation receiver (11) that receives an input operation and a notifier (60) to perform:
first execution in which a first process is performed upon duration of a detected continuation of the input operation being a reference time or longer;
second execution in which a second process is performed upon duration of a detected continuation of the input operation being less than the reference time; and
notification control in which the notifier (60) displays a content from which it is determinable whether or not duration of a detected continuation of the input operation being the reference time or longer.
